**Europäisches Patentamt**

**European Patent Office**

**Office européen des brevets**

(11) Veröffentlichungsnummer: **0 033 106**
**B1**

(12) **EUROPÄISCHE PATENTSCHRIFT**

(45) Veröffentlichungstag der Patentschrift:
**22.08.84**

(51) Int. Cl.³: **G 03 F 1/00**

(21) Anmeldenummer: **81100332.6**

(22) Anmeldetag: **17.01.81**

(54) Verfahren zur verbesserten Bildwiedergabe in der Reproduktionstechnik.

(30) Priorität: **26.01.80 DE 3002781**

(43) Veröffentlichungstag der Anmeldung:
**05.08.81 Patentblatt 81/31**

(45) Bekanntmachung des Hinweises auf die Patenterteilung:
**22.08.84 Patentblatt 84/34**

(84) Benannte Vertragsstaaten:
**CH FR GB IT LI NL SE**

(56) Entgegenhaltungen:
**DE - A - 2 262 824**
**DE - A - 2 402 102**
**DE - A - 2 812 821**
**FR - A - 2 432 728**
**US - A - 4 084 196**

(73) Patentinhaber: **DR.-ING. RUDOLF HELL GmbH,**
**Grenzstrasse 1-5, D-2300 Kiel 14 (DE)**

(72) Erfinder: **Sing, Gerhard, Rinkenberg 96,**
**D-2301 Schönkirchen (DE)**
Erfinder: **Wellendorf, Klaus, Dr., Kreienholt 6,**
**D-2305 Kitzeberg bei Kiel (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren zur verbesserten Bildwiedergabe in der Reproduktionstechnik, insbesondere bei der Druckform-Herstellung.

Zur Gewinnung der Farbauszüge für den Mehrfarbendruck werden neben dem klassischen Verfahren mittels Repro-Kamera in steigendem Masse elektronische Geräte zur Herstellung der Farbauszüge, sogenannte Scanner benutzt, die die Farbkorrektur und die für den Druck erforderliche Rasterzerlegung der Bilder bzw. ganzer Seiten vornehmen. Sehr oft sind in solchen Bildern oder Seiten Strichzeichnungen, wie Schriften, Ränderbalken, Signets, Trennstriche, Rahmen usw., enthalten. Würde man solche Strichzeichnungselemente einfach zusammen mit den Halbtonbildern aufrastern, dann würde durch die Aufrasterung an bestimmten Konturen eine treppenförmige Entstellung der im Original glatten Strichkonturen entstehen, die in der Druckwiedergabe untragbar störend wirkt. Üblicherweise gewinnt man heute die Farbauszüge derart, dass man nur die Halbtonbilder in elektronischen Geräten oder Kameras aufrastert. Diese Halbtonauszüge werden dann mit einem Film zusammenmontiert, der die ungerasterte Strichzeichnung trägt. Von dieser Montage wird auf einem dritten Film ein Zwischennegativ hergestellt. Dieses wird abermals kopiert und liefert einen Farbauszug, der jetzt die Kombination gerasterter Halbtonbilder und ungerasterter Strichzeichnungen trägt und zur Druckformherstellung benutzt wird. Man ist also gewzungen, diesen material- und zeitaufwendigen Weg zu gehen, der zudem durch die vielen Kopierprozesse noch erhebliche Unsicherheit in das Gesamtverfahren bringt, wenn man die glatten Konturen der Strichzeichnung in den gerasterten Halbtonbildern bis hin zur Druckform erhalten will.

In der DE-A-2 812 821 ist bereits ein Verfahren zur Reproduktion eines durch Abtastung in Elemente unterteilten Bildes angegeben, bei dem der Schwärzungsgrad für jedes Element mittels einer Punktmatrix, deren Grösse dem Element entspricht, wiedergegeben wird, indem für jedes zu reproduzierende Element eine seinem Schwärzungsgrad entsprechende Anzahl von Punkten in der Matrix betätigt wird. Diese Art der Reproduktion ist zwar geeignet, unter besonderen Vorkehrungen eine Konturenverbesserung zu erreichen, aber mit einer Aufzeichnungseinheit, die Rasterpunkte als zusammenhängende Fläche und nicht als in der Fläche verteilte Punkte einer Punktmatrix wiedergibt, ist dieses Verfahren nicht durchführbar. Die US-A-4 084 196 beschreibt eine elektronische Rastererzeugung für Faksimile-Systeme, die es ermöglicht, auch mit Systemen, die für übliche analoge Schwarz/Weiss-Reproduktion ausgelegt sind, eine Grauton-Reproduktion vorzunehmen. Hierzu werden anstelle der bei der Schwarz/Weiss-Reproduktion übertragenen Informationen für die einzelnen aufzuzeichnenden Tonwerte Codes ausgesendet, die auf der Empfangsseite eine Druckeinheit veranlassen innerhalb einer aus mehreren Elementen aufgebauten Zelle ebenfalls eine Anzahl von Punkten zu drucken, die dann für diese Zelle wie die bei der DE-A-2 812 821 beschriebenen Punktmatrix den entsprechenden Tonwert angeben. Für dieses Verfahren gilt das zu der DE-A-2 812 821 Gesagte.

Man könnte zwar die Strichwiedergabe in den elektronischen Geräten dadurch verbessern, dass man beide Informationen Halbton- wie Strichbilder mit mehrfacher, beispielsweise 2- bis 3-facher Linienfeinheit, abtastet und aufzeichnet. Jedoch würde bei vorgegebener Schreibgeschwindigkeit die Bearbeitungszeit proportional mit der Verfeinerung ansteigen, was ebenfalls für den praktischen Betrieb nicht tragbar ist. Ausserdem tritt bei der Abspeicherung ganzer Bilder ein erhöhter Speicherbedarf auf.

Der vorliegenden Erfindung liegt die Aufgabe zugrunde, die aufgezeigten Nachteile zu vermeiden und ein Verfahren anzugeben, das mit verbesserter Bildwiedergabe bei der Herstellung von Druckformen, insbesondere in der Drucktechnik oder Textildrucktechnik, arbeitet.

Die Erfindung erreicht dies durch die im Anspruch 1 genannten Merkmale. Vorteilhafte Weiterbildungen sind in den Unteransprüchen 2–5 angegeben.

In einem elektronischen Gerät zur Herstellung von Farbauszügen wird somit gleichzeitig mit Abtastung des Halbtonbildes von einer besonderen Vorlage oder bei Ausgabe aus einem elektronischen Bildspeicher die Strichzeichnungsinformation abgetastet, und zwar mit der gleichen Linienfeinheit wie das Halbtonbild. Die Abtastwerte der Strichinformation werden jedoch einer besonderen Schaltung zugeführt, die die Inhalte mehrerer benachbarter Abtastlinien speichert und in jedem Abtastpunkt durch Vergleich mit der Umgebung des Punktes verfeinerte Zwischenwerte gewinnt.

Eine Möglichkeit der Gewinnung von Zwischenwerten ist z.B. in der US-A-4,075,663 beschrieben. Diese Werte werden einem Aufzeichnungsorgan zugeführt, das mehrere selektiv ansteuerbare Aufzeichnungsstrahlen hat. Einem solchen Aufzeichnungsorgan (z.B. beschrieben in DE-PS 21 07 738), das üblicherweise für die Halbtonaufzeichnung zur Darstellung der unterschiedlich grossen und unterschiedlich geformten Rasterpunkte benutzt wird, wird durch die Erfindung die verbesserte Strichinformation so zugeführt, dass sie in die gerasterte Halbtoninformation eingeblendet wird. Die Linienfeinheit der Strichinformation mag dabei dennoch gröber sein als die Auflösung, die zur Darstellung der Halbton-Rasterpunkte benutzt wird. In vorteilhafter Weise kann man zur Darstellung der Rasterpunkte z.B. sechs selektiv angesteuerte Aufzeichnungsstrahlen innerhalb einer Schreiblinie benutzen, die man für die Strichaufzeichnung einzeln benutzt oder paarweise zusammenfasst, so dass sich für die Strichaufzeichnung die 6- oder 3fache Linienfeinheit des Halbton-Aufzeichnungsrasters ergibt. Für nicht so hohe Ansprüche mag immer noch eine Zusammenfassung von 2×3 Aufzeichnungsstrahlen von Vorteil sein, was in der Strichaufzeichnung einer Verdoppelung der Feinheit des Halbtonrasters entspricht.

Wenn für andere Druckverfahren fast ausschliesslich die Aufzeichnung von Strichzeichnungen vorgenommen wird (beispielsweise im Textildruck) entfällt natürlich der Vorgang des Einblendens in ein gerastertes Halbtonbild; dennoch kann die erfindungsgemäss verfeinerte Aufzeichnung der Strichinformation ohne Zeitverlust sinngemäss erfolgen.

Die Erfindung wird im folgenden anhand der Fig. 1 bis 6 näher beschrieben.

Es zeigen:

Fig. 1 Eine schematische Darstellung der Einfügung der erfindungsgemässen Anordnung in den grundsätzlichen Aufbau eines elektronischen Gerätes zur Herstellung von Farbauszügen,

Fig. 2 und 3 Beispiele der Verfeinerung an unterschiedlichen Konturen,

Fig. 4 ein Beispiel für eine Schaltung zur Verfeinerung der Strichaufzeichnung,

Fig. 5 ein Impulsdiagramm der Steuerung,

Fig. 6 ein Schaltungsbeispiel für eine Gatterschaltung.

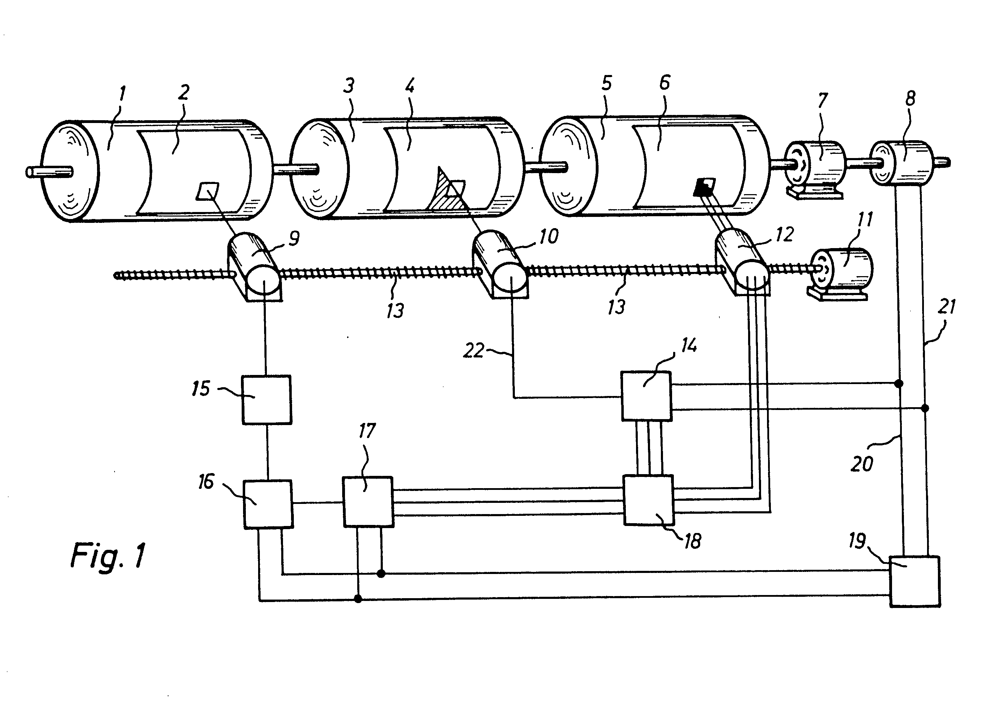

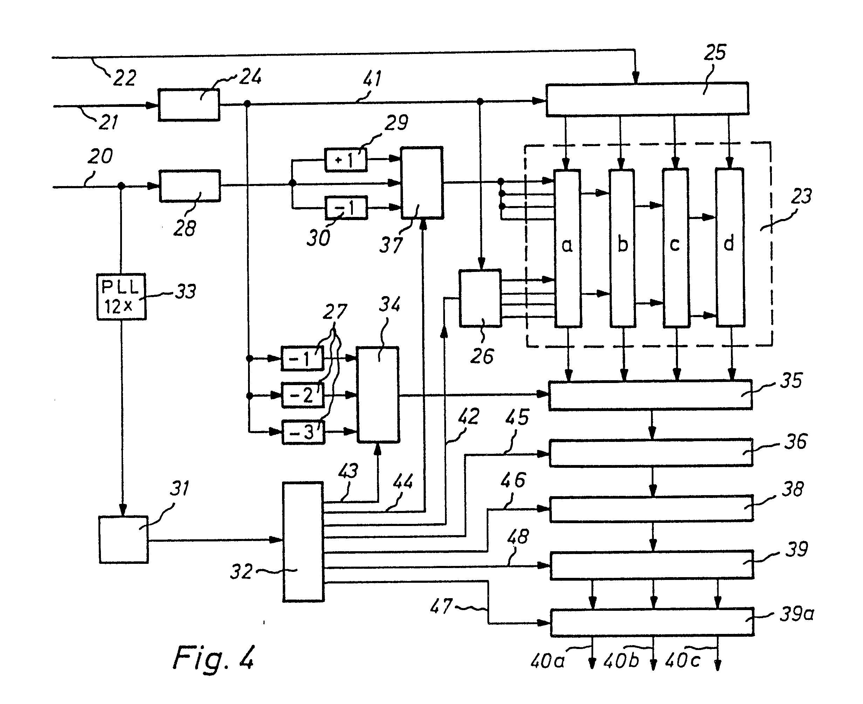

Die Fig. 1 zeigt das Prinzip eines elektronischen Gerätes zur Herstellung von Farbauszügen, in das eine Schaltung 14 zur Verfeinerung der Strichaufzeichnung gemäss der Erfindung einbezogen ist. Ein solches Gerät besteht aus einem Abtastzylinder 1, der die Halbtoninformation 2 trägt. Ein weiterer Abtastzylinder 3 trägt die Strichinformation 4. Auf einem weiteren Zylinder 5 wird das kombinierte, farbkorrigierte und aufgerasterte Ausgangsprodukt 6 in Form eines Farbauszugs zur Weiterverarbeitung für die Druckformherstellung aufgezeichnet. Das kann z.B. durch Lichtstrahlen auf lichtempfindlichen Film geschehen. Alle drei Zylinder 1, 3, 5 werden mit gleicher Drehzahl von einem Motor 7 angetrieben. Vor dem Zylinder 1 ist ein Abtastorgan 9 zur Abtastung der Halbtoninformation 2, vor dem Zylinder 3 ist ein Abtastorgan 10 zur Abtastung der Strichinformation 4 angeordnet. Vor dem Aufzeichnungszylinder 5 ist ein Aufzeichnungsorgan 12 angeordnet. Die Abtastorgane 9 und 10 sowie das Aufzeichnungsorgan 12 führen mittels der Spindel 13, die vom Motor 11 angetrieben wird, eine zu den Zylindern axiale Vorschubbewegung aus. Aus dem Zusammenspiel zwischen Drehbewegung, Vorschub und einem mit den Zylindern 1, 3, 5 auf gleicher Welle angeordneten Taktgeber 8 ergibt sich das Abtast- wie auch der Halbtonaufzeichnungs-Raster. Ausser dem Rastertakt erzeugt der Taktgeber 8 noch einen Impuls, der den Anfang jeder Umfangslinie angibt. Beide Takte werden über Leitungen 20 bzw. 21 einem Vervielfacher 19 zugeführt, der den Takt für einen Rasterrechner 17 aufbereitet, in dem entsprechend der Abtastwerte des Halbtonabtasters 9 Form und Grösse der aufzuzeichnenden Rasterpunkte generiert werden. Die Abtastwerte vom Abtastorgan 9 durchlaufen zunächst einen analog arbeitenden Farbrechner 15, der die Farbkorrektur vornimmt. Der Rasterrechner 17 arbeitet digital. Deshalb werden die im Farbrechner 15 korrigierten Werte zuvor in einem Analog-Digital-Wandler 16 digitalisiert. Der Rastertakt von Leitung 20 sowie der Takt für den Zeilenanfang von Leitung 21 werden weiterhin auch der Schaltung 14 zugeführt, von der ein Schaltungsbeispiel anhand von Fig. 4 näher erläutert wird.

In modernen elektronischen Geräten zur Herstellung von Farbauszügen werden Grösse und Form der Halbton-Rasterpunkte im Rasterrechner 17 generiert und durch mehrere separat ansteuerbare Schreibstrahlen aufgezeichnet, wie z.B. in DE-B-2107738 und DE-B-1901101 beschrieben. Wegen des komplizierten und vielfältigen Aufbaus der Halbton-Rasterpunkte ist in der Regel dabei die Anzahl der Schreibstrahlen in einer Abtastlinienbreite höher, als es für die erfindungsgemässe Verfeinerung der Strichwiedergabe nötig wäre.

Die Schaltung 18, in der Rasterinformation und Strichinformation zusammenlaufen, enthält deshalb vorteilhafterweise logische Schaltelemente, die beim Einblenden von Strichinformation die Schreibstrahlen gruppenweise zusammenfassen, beispielsweise drei Gruppen zu je zwei Schreibstrahlen oder zwei Gruppen zu je drei Schreibstrahlen. Auch umschaltbare Gruppierung für verschiedene Anwendungen ist möglich.

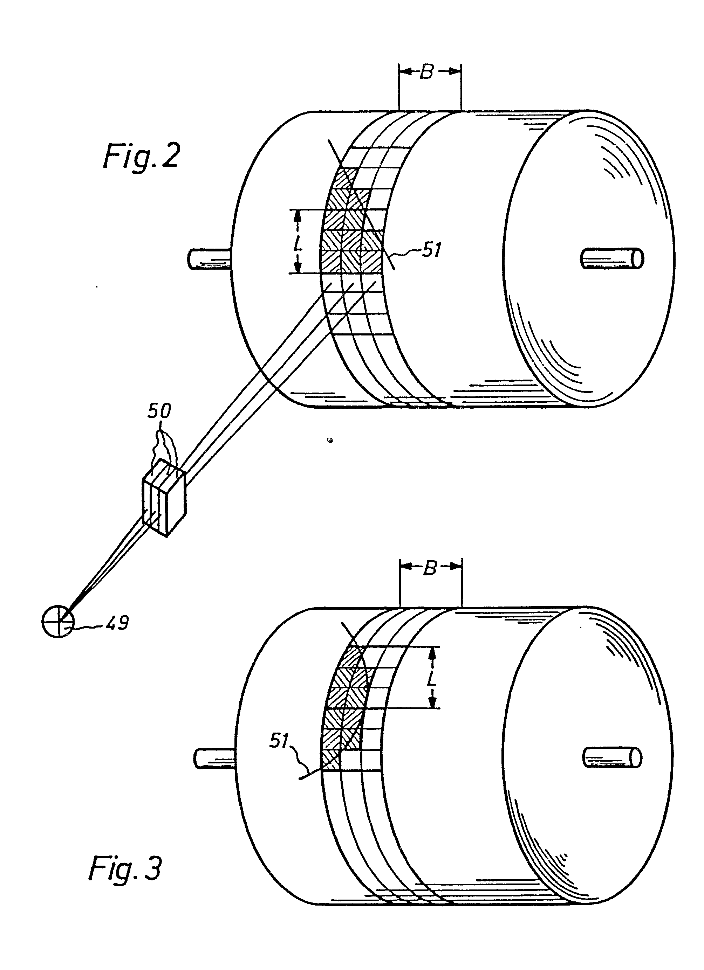

Fig. 2 und Fig. 3 verdeutlichen an unterschiedlich geformten Konturen 51, wie die Verfeinerung der Strichaufzeichnung zustande kommt. Hier sind z.B. innerhalb einer Schreiblinienbreite B drei Aufzeichnungsstrahlen angeordnet, die getrennt angesteuert werden können. Dabei können die Einzelstrahlen vorteilhafterweise aus Gruppen zusammengefasster Aufzeichnungsstrahlen, aus einer mehrstrahligen Aufzeichnungseinrichtung zur Darstellung von Halbton-Rasterpunkten bestehen, wie z.B. in DE-B-2107738 beschrieben. Auf die Länge eines Halbtonrasterpunkt-Abstandes L in Umfangsrichtung können diese Aufzeichnungsstrahlen z.B. von der Schaltung 14 dreimal angesteuert werden, so dass in einer Rastermasche B × L neun Felder separat angesprochen werden können. Man erkennt, dass die in den Fig. 2 und 3 willkürlich als Beispiel gewählten Konturenformen 51 durch bestimmte Punktmuster innerhalb jedes Rasterfeldes B × L im Sinne der Erfindung verfeinert wiedergegeben werden. In Fig. 2 sind noch zur Verdeutlichung drei Lichtmodulatoren 50 und die Lichtquelle 49 eingezeichnet.

Anhand von Fig. 4 wird ein Beispiel für die Schaltung 14 (Fig.1) zur Gewinnung der Punktmuster aus den Informationen der jeweiligen Punktumgebung bei der Strichaufzeichnung beschrieben. Das Schaltungsbeispiel geht wieder davon aus, dass eine Rastermasche (B × L in Fig. 2) in 3 × 3 Einzelfelder unterteilt wird. Die prinzipielle Arbeitsweise ist folgende: Die Strichinformation vom Strichabtaster 10 (Fig. 1) gelangt über Leitung 22 und einen Demultiplexer 25 in einen Vierfach-Wechselspeicher 23 a-d, der die Werte von je vier aufeinanderfolgenden Abtastlinien so speichert, dass in jedem Speicherteil eine Abtastlinie steht. Drei Teile des Speichers halten die Umgebungsinformationen des auszuwertenden Punktes bereit, während in dem vierten Teil die nächste Abtastlinie eingeschrieben wird. Der Punktumgebungsinformation, die in den drei jeweils mit benachbarten Bildlinien geladenen Speichern zur Verfügung steht, wird über einen Festwertspeicher 39 ein bestimmtes Muster des vom Aufzeichnungsorgan 12 zu schreibenden Punktes zugeordnet. Der Festwertspeicher 39 ist so programmiert, dass dieses Punktmuster optimal zu der von der Abtastung erfassten Kontur passt und deren Wiedergabe in der erfindungsgemässen Form verfeinert.

Ein Zeilenzähler 24 (z.B. SN 74293 der Fa. Texas Instruments) steuert über eine 2-Bit-Leitung 41 die zyklische Umschaltung des Wechselspeichers 23 a-d (z.B. 4 × SEMI 4200 der Fa. Electronic Memories and Magnetics), indem er über einen Demultiplexer 25 (z.B. SN 74139 der Fa. Texas Instruments) bestimmt, in welchen Teil des Wechselspeichers die Strichinformation eingelesen wird.

Er steuert weiterhin den Leseimpuls, der vom Steuerwerk über Leitung 42 kommt, den er über einen weiteren Demultiplexer 26 (z.B. SN 74130 der Fa. Texas Instruments) entsprechend dem Wechselspeicher aufschaltet. Gleichzeitig stellt der Zeilenzähler 24 über 3 Subtrahierer (z.B. Sn 7482 der Fa. Texas Instruments), die konstant um 1, 2 bzw. 3 subtrahieren, und über einen Multiplexer 34 (z.B. SN 74153 der Fa. Texas Instruments) die Adressen für diejenigen Zeilen zur Verfügung, aus denen ausgelesen werden darf. Der über Leitung 20 vom Taktgeber 8 (Fig. 1) mit dem Abtasttakt getaktete Adresszähler 28 (z.B. 3 × SN 74293 der Fa. Texas Instruments) stellt zusammen mit einem Addierer 29 (z.B. 3 × SN 74283 der Fa. Texas Instruments), der konstant um 1 addiert, und einem Subtrahierer 30 (z.B. 3 × SN 74283 der Fa. Texas Instruments), der konstant um 1 subtrahiert, die drei Punktadressen bereit, aus denen ausgelesen werden kann.

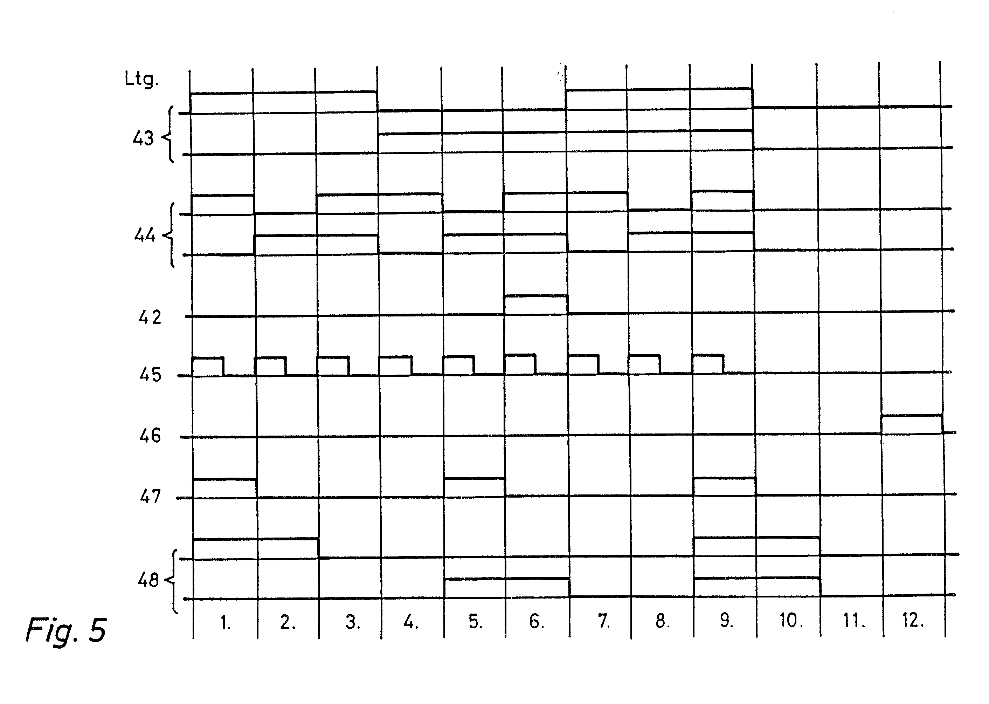

Die Steuerung ist für linearen Programmverlauf ausgelegt und besteht aus einem Programmzähler 31 (z.B. SN 7492 der Fa. Texas Instruments) und einem programmierbaren Speicher 32 (z.B. 2 × SN 74188 der Fa. Texas Instruments). Dieser enthält das Mikroprogramm zur Steuerung, dessen Impulsdiagramm in Fig. 5 dargestellt ist. Die Taktung des Steuerwerks geschieht mit einem Vielfachen der Abtastfrequenz (hier z.B. dem 12fachen), das über einen Frequenzvervielfacher 33 in PLL-Schaltung (z.B. beschrieben in RCA Applikationsbericht ICAN 6101) erzeugt wird.

Der Faktor 12 stellt dem Steuerwerk zwölf Programmschritte für die Dauer eines Abtasttaktes bereit. Im Verlauf dieser Programmschritte schaltet das Steuerwerk über Leitung 43 (2-Bit) über den Multiplexer 34 nacheinander die drei Wechselspeicherteile, die gerade die volle banachbarte Strichinformation enthalten, über einen weiteren Multiplexer 35 (z.B. SN 74153 der Fa. Texas Instruments) auf ein Schieberegister 36 (z.B. 3 × SN 7495A) und wählt innerhalb jeder Zeile über Leitung 44 (2 Bit) über einen Multiplexer 37 (z.B. 6 × 74153 der Fa. Texas Instruments) drei Punkte an, so dass am Eingang des Schieberegisters 36 nacheinander neun Punktinformationen erscheinen. Das Steuerwerk liefert über Leitung 45 zu jeder Punktinformation einen Impuls, der das Schieberegister zum Schieben veranlasst, so dass nach den neun Schiebungen die Information parallel am Ausgang des Schieberegisters anliegt. Über Leitung 46 erteilt das Steuerwerk einem nachgeschalteten Register 38 (z.B. 2 × SN 74174 der Fa. Texas Instruments) einen Ladeimpuls, so dass die 9-Bit Information in das Register 38 übernommen wird, um dort für die nächstfolgende Abtastdauer zum Generieren des Punktmusters bereitzustehen, während das Schieberegister 36 zum Sammeln der nächsten Information frei wird. Die im Register 38 gespeicherte Information bildet zusammen mit einer 2-Bit Information, die über Leitung 48 von der Steuerung kommt, die Adresse für den programmierbaren Speicher 39. Dabei bleibt für die Dauer des Schreibtaktes für einen ganzen Punkt (B × L) der Adressteil, der vom Register 38 kommt, konstant, während der Adressteil, der vom Steuerwerk über Leitung 48 kommt, innerhalb eines Punktes dreimal umgeschaltet wird. Damit wird der zu schreibende Punkt auch in Umfangsrichtung in drei Zeilen aufgelöst, womit die Verfeinerung auch in Umfangsrichtung wirksam wird. Nach Zwischenspeicherung mittels eines Impulses auf Leitung 47 in einem weiteren Register 39 a (z.B. Typ 74175 SN 74175 der Fa. Texas Instruments), steht an dessen Ausgängen 40 a-c ein Ansteuersignal für die Schaltung 18 (Abb. 1) bereit.

Für das angegebene Programmbeispiel ist in Fig. 5 zur Verdeutlichung ein Impulsdiagramm angegeben, das den zeitlichen Verlauf der Ausgangsimpulse aus dem programmierbaren Speicher 32 zeigt.

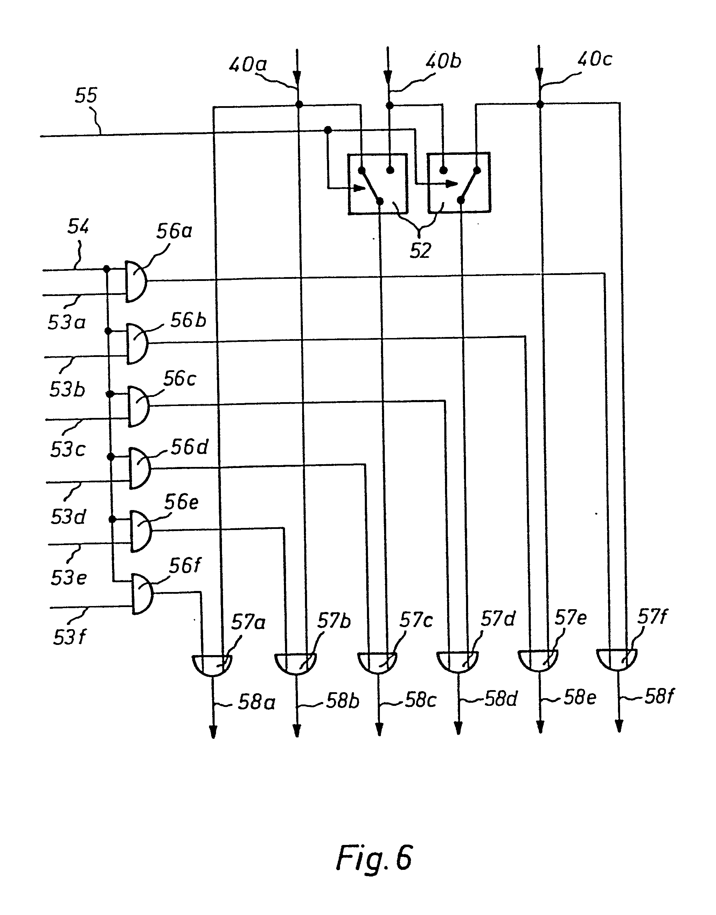

Fig. 6 zeigt ein Beispiel der Schaltung 18 (Fig. 1), die Rastersignale und verfeinerten Strichsignale vor der Aufzeichnung in geeigneter Weise vereinigt. Hier wird als Beispiel wieder davon ausgegangen, dass sechs Aufzeichnungsstrahlen vorhanden sind. Dies können z.B. Lichtstrahlen sein, die von Lichtmodulatoren 50 (Fig. 2) moduliert auf lichtempfindlichen Film aufzeichnen. Die Lichtmodulatoren werden über die sechs Leitungen 58 a-f angesteuert. Diese Leitungen sind Ausgänge von sechs ODER-Gattern 57 a-f, an deren Eingängen die Rasterinformation aus den Ausgangsleitungen der UND-Gatter 53 a-f und die erfindungsgemäss verfeinerte Strichinformation aus den Leitungen 40 a-c (Fig. 4) zusammenlaufen. Die Rasterinformation steht jeweils an einem Eingang der UND-Gatter 53 a-f; die anderen Eingänge liegen parallel auf Leitung 54. Je nach dem, welches logische Signal an Leitung 54 ansteht, wird erfindungsgemäss die Rasterinformation beim Schreiben eines verfeinerten Strichmusters unterdrückt oder nicht.

Zwei elektronische Umschalter 52, hier der Einfachheit halber als mechanische Schalter dargestellt, können die Gruppierung der sechs Aufzeichnungssignale 57 a-f durch Ansteuerung der Schalter 52 über Leitung 55 wahlweise in drei Gruppen zu je zwei benachbarten Aufzeichnungsstrahlen oder in zwei Gruppen zu je drei banachbarten Aufzeichnungsstrahlen umschalten.

**Patentansprüche**

1. Verfahren zur verbesserten Bildwiedergabe in der Reproduktionstechnik, bei dem die Aufzeichnung mit einer feineren Auflösung vorgenommen wird als die Abtastung und die feinere Auflösung bei der Aufzeichnung durch mehrere selektiv ansteuerbare Aufzeichnungsstrahlen vorgenommen wird, dadurch gekennzeichnet, dass die Aufzeichungsstrahlen zur verfeinerten Strichwiedergabe einzeln benutzt oder gruppenweise zusammengefasst und gruppenweise angesteuert werden.

2. Verfahren nach Anspruch 1, dadurch gekennzeichnet, dass zur Aufzeichnung von Halbtonrasterpunkten die Aufzeichnungsstrahlen in bekannter Weise separat ansteuerbar sind.

3. Verfahren nach Anspruch 1, dadurch gekennzeichnet, dass die Steuerinformation für die Ansteuerung der einzelnen Aufzeichnungsstrahlen aus der Abtastinformation des jeweiligen Abtastpunktes und der Abtastinformation seiner Umgebunspunkte gewonnen wird.

4. Verfahren nach Anspruch 3, dadurch gekennzeichnet, dass die Abtastwerte zur Erfassung der Umgebung eines jeden Abtastpunktes in Form von mehreren nebeneinanderliegenden Abtastlinien digital gespeichert werden.

5. Verfahren nach Anspruch 4, dadurch gekennzeichnet, dass eine Anzahl von Punktmustern in der feineren Auflösung der Aufzeichnung gespeichert wird, dass diese mit den Abtastwerten des jeweiligen Abtastpunktes und seiner Umgebungspunkte auf Übereinstimmung verglichen werden und dass die durch den Vergleich ermittelten Punktmuster die Strichinformationen für die Aufzeichungen der einzelnen Aufzeichnungsstrahlen ergeben.

**Claims**

1. A method for improving image reproduction in reproduction technology, in which the recording operation is performed with a finer resolution than the scanning operation and the finer resolution is implemented during recording by means of serveral selectively energizable recording beams, characterized in that the recording beams are utilized individually or combined in groups and energized in groups, for more precise line reproduction.

2. A method according to claim 1, characterized in that the recording means are separately energizable in known manner for recording halftone screen dots.

3. A method according to claim 1, characterized in that the control data for energization of the individual recording beams are obtained from the scanned data of the dot scanned momentarily and from the scanned data of its surrounding dots.

4. A method according to claim 3, characterized in that the scanned values for determination of the surroundings of each dot scanned are stored digitally in the form of several adjacently situated scanning lines.

5. A method according to claim 4, characterized in that a number of dot patterns in the finer recording resolution is stored, that these are compared to the scanned values of the scanned dot in question and of its surrounding dots for correspondence, and that the dot patterns determined by the comparison yield the line data for recording the individual recording beams.

**Revendications**

1. Procédé pour améliorer la reproduction d'images dans la technique de reproduction, procédé dans lequell'enregistrement s'effectue avec une résolution plus fine que le balayage et cette résolution plus fine lors de l'enregistrement étant assurée par plusieurs faisceaux de l'enregistrement susceptibles d'être commandés sélectivement, procédé caractérisé en ce que les faisceaux d'enregistrement en vue de la reproduction des traits avec une finesse améliorée, sont utilisés individuellement ou bien rassemblés par groupes et commandés par groupes.

2. Procédé selon la revendication 1, caractérisé en ce que, pour l'enregistrement de points de trame en demi-teintes, les faisceaux d'enregistrement sont susceptibles de façon connue, d'être commandés séparément.

3. Procédé selon la revendication 1, caractérisé en ce que l'information de commande pour la commande des faisceaux d'enregistrement individuels est obtenue à partir de l'information d'exploration du point de balayage considéré et à partir de l'information d'exploration de ses points environnants.

4. Procédé selon la revendication 3, caractérisé en ce que les valeurs d'exploration servant à détecter l'environnement de chacun des points de balayage sont mémorisées numériquement sous la forme de plusieurs lignes de balayage juxtaposées.

5. Procédé selon la revendication 4, caractérisé en ce qu'un certain nombre de motifs de points sont mémorisés dans la résolution plus fine de l'enregistrement, ces motifs étant comparés avec les valeurs d'enregistrement du point d'exploration considéré et de ses points environnants pour rechercher la coincidence, les motifs de points résultant de la comparaison constituant les informations de traits pour l'enregistrement des différents faisceaux d'enregistrement.

Fig. 1

0 033 106

Fig.2

Fig.3

Fig. 4

Fig. 5

Fig. 6